**Europäisches Patentamt**

**European Patent Office**

**Office européen des brevets**

(19)

(11) Numéro de publication: **0 206 924
B1**

(12)

# FASCICULE DE BREVET EUROPEEN

(45) Date de publication du fascicule du brevet:
**28.12.88**

(51) Int. Cl.⁴: **B 64 D 17/32,** B 64 D 25/02

(21) Numéro de dépôt: **86401309.9**

(22) Date de dépôt: **17.06.86**

(54) **Attache deblocable pour harnais d'équipement de siège éjectable.**

(30) Priorité: **20.06.85 FR 8509364**

(43) Date de publication de la demande:
**30.12.86 Bulletin 86/52**

(45) Mention de la délivrance du brevet:
**28.12.88 Bulletin 88/52**

(84) Etats contractants désignés:
**DE GB IT**

(56) Documents cités:
**FR-A- 1 155 303
FR-A- 1 207 695
GB-A- 335 431
GB-A- 915 168**

(73) Titulaire: **AERAZUR, 58, Boulevard Galliéni, F-92130 Issy les Moulineaux (FR)**

(72) Inventeur: **Didierlaurent, Denis, 60, 62 Rue de Moxouris, F-78150 Le Chesnay (FR)**
Inventeur: **Quemener, Jean-Claude, 5, Rue des 4 Tours, F-94250 Gentilly (FR)**
Inventeur: **Morgan, Joseph, 112, Avenue Pierre Brossolette, F-92240 Malakoff (FR)**

(74) Mandataire: **Marquer, Francis et al, Cabinet Moutard 35, Avenue Victor Hugo, F-78960 Voisins le Bretonneux (FR)**

ACTORUM AG

## Description

Les harnais d'équipement de sièges éjectables d'avions comportent des sangles terminées par des bélières munies d'ouvertures et susceptibles de s'encliqueter dans des logements plats dont est muni, à la périphérie de sa base, le corps d'une attache ou boucle, elle-même fixée par ladite base à une ceinture ventrale.

A l'opposé de sa base de fixation à la ceinture, le corps de la boucle forme un volant de manoeuvre qui, par rotation dans un sens ou dans l'autre, commande des organes de verrouillage et de déverrouillage des bélières. Pour des raisons de sécurité, ces opérations de verrouillage et de déverrouillage requièrent en outre que le pilote appuie sumultanément sur deux oreilles montées oscillantes au voisinage du volant de manoeuvre, oreilles qui commandent des moyens de blocage du volant de manoeuvre dans sa position de verrouillage et de déverrouillage.

Il est généralement exigé que les bélières puissent être introduites dans les logements susvisés sans devoir les présenter sous un angle déterminé.

L'attache doit évidemment être extrêmement fiable, son déverrouillage devant en particulier pouvoir s'effectuer même après l'exercice d'un choc avant violent sur le siège, et rapidement.

Ces contraintes deviennent encore plus sévères avec les avions dits à haute manoeuvrabilité, où les accélérations sont très grandes et où l'espace laissé au pilote pour passer sa main lorsqu'il manoeuvre la boucle est restreint. La boucle doit alors être très légère et très plate et sa préhension doit pouvoir s'effectuer à coup sûr par une manoeuvre facile effectuée avec la main droite ou la main gauche.

Les boucles de l'art antérieur ne répondent pas complètement à l'ensemble des exigences ci-dessus. En particulier, la boucle décrite dans le brevet GB-A-335 431 qui correspond au préambule de la revendication 1, n'exige pas, pour le verrouillage, que le pilote appuie sur les deux oreilles oscillantes: le verrouillage s'effectue en effet par simple introduction de l'oeillet de la ceinture dans une fente de l'organe de verrouillage, mais cette introduction n'est possible que si l'oeillet est présenté sous un angle rigoureusement déterminé et du côté droit de la boucle. Par ailleurs, le déverrouillage n'est possible faisant tourner le volant de manoeuvre dans un sens déterminé. En outre, compte tenu du volume nécessaire à la rotation de l'organe de verrouillage, constitué par un cylindre, la boucle n'est pas ultra-plate.

Enfin, aucune mesure n'est prise pour signaler visuellement à l'opérateur que la bélière est effectivement accrochée.

L'invention a pour objet une attache exempte des inconvénients ci-dessus et dans laquelle on a en outre pris des mesures pour empêcher un encliquetage par exercice intempestif d'une pression sur une seule oreille.

Suivant l'invention, cette attache comporte un corps fixable sur une ceinture ayant à sa base de fixation au moins deux logements destinés à recevoir des pièces de jonction de la ceinture avec lesquels des organes mobiles de verrouillage viennent s'engager, un volant de manoeuvre, situé à la base opposée dudit corps, commandant le déplacement desdits organes mobiles par l'intermédiaire de moyens de transmission et deux leviers, articulés sur le volant de manoeuvre de façon à pouvoir se rapprocher l'un de l'autre par l'exercice d'une pression simultanée, commandant des moyens de blocage du volant de manoeuvre dans sa position de verrouillage ou de déverrouillage, lesdits moyens de blocage étant solidarisés du corps de l'attache et agencés pour définir une première position angulaire du volant qui correspond à ladite position de verrouillage et une seconde position angulaire du volant qui correspond à une position de déverrouillage, caractérisée en ce que les organes de verrouillage sont montés rétractables sur un équipage mobile en translation dans une direction parallèle à l'axe de rotation du volant et bloqué en rotation, que lesdits leviers sont munis chacun d'un ergot, tandis que les moyens de blocage sont munis d'encoches coopérant avec les ergots pour définir, outre ladite première et ladite seconde positions angulaires du volant, au moins une troisième position annulaire du volant correspondant à une position supplémentaire de déverrouillage, lesdits moyens de transmission étant agencés pour transformer les rotations en sens inverses l'un de l'autre du volant, à partir de sa première position angulaire, respectivement vers sa seconde et sa troisième positions angulaires, en un premier mouvement de translation unidirectionnelle de l'équipage mobile vers sa position de déverrouillage et pour transformer les rotations du volant depuis sa seconde ou sa troisième positions angulaires vers sa première position angulaire et un second mouvement de translation de l'équipage mobile inverse du premier vers sa position de verrouillage.

Dans un mode d'exécution préféré, les deux positions angulaires de déverrouillage sont symétriques par rapport à une position de verrouillage unique.

L'invention sera mieux comprise à l'aide de la description ci-après.

Au dessin annexé:

la figure 1 est une vue en perspective éclatée d'une attache conforme à un mode d'exécution préféré de l'invention, dont

les figures 2 et 3 représentent la pièce principale du barillet, vue en élévation avec coupe partielle suivant F à la figure 2 et en plan à la figure 3; et

la figure 4 représente schématiquement un moyen de visualisation permettant de s'assurer de l'accrochage effectif d'une bélière.

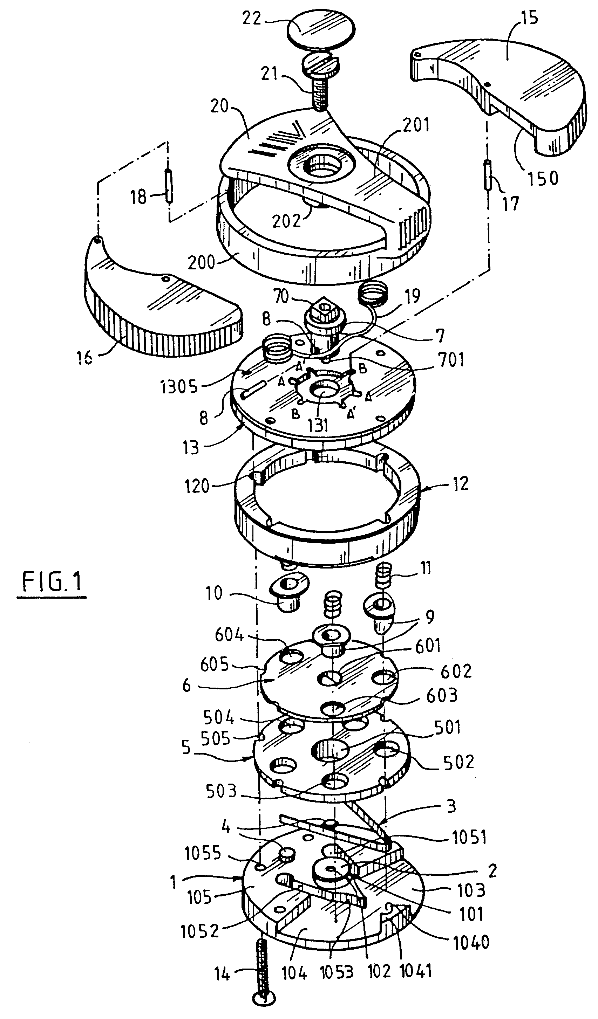

A la figure 1, on voit que l'attache comprend principalement: un plateau de base 1 muni, sur sa face extérieure (c'est-à-dire opposée à sa face de fixation sur la ceinture ventrale), de pions 4 de maintien d'un ressort d'éjection 3; un barillet comportant un disque intérieur 5 et un disque extérieur 6; un doigt fixe 10 et deux doigts mobiles 9; trois ressorts 11 qui s'engagent dans les chapeaux des doigts respectifs; une cage de barillet 12; un plateau extérieur 13; un axe central; un ressort de verrouillage 19; un volant de manoeuvre 20 et deux oreilles de déverrouillage 15-16 articulées sur le volant au moyen de deux goupilles telles que 18.

Le plateau 1 comporte une cuvette 101 dont le fond est muni d'un alésage central 102 et reçoit une

rondelle de frottement 2. Cette cuvette reçoit, en outre, une collerette 501 qui prolonge la face intérieure du disque 5. L'axe central 7 traverse successivement un alésage central 131 du plateau 13, une collerette centrale 601 du disque 6 et la collerette 501 (la collerette 601 est emboîtée dans la collerette 501), pour venir, par son extrémité de plus faible diamètre 701, s'engager dans l'alésage 102.

Les doigts 9 et 10 traversent des orifices respectifs 602-603 et 604 du disque 6 et 502-503 et 504 du barillet 5, pour venir s'engager par leur extrémité: pour le doigt 10, dans un trou borgne, non figuré, ménagé dans le plateau 1 et pour les doigts 9, dans les logements en forme de secteurs 103 et 104 ouverts sur leur périphérie. Ces logements sont délimités par la face intérieure du disque 5 et par la partie basse de la surface extérieure étagée du plateau 1. La partie haute 105 de cette extérieure étagée sert à la fixation des extrémités libres du ressort 3. Celui-ci est en forme de V et reçu dans des rainures 1051 à 1052 ménagées dans ladite partie haute au fond desquelles les pions, figurés en 4 en position enlevée, lui servent de pivots. Le sommet arrondi du V vient s'engager dans une encoche 1040 portée par une saillie 1041 formée sur la partie basse de la surface extérieure étagée du plateau 1. Les branches du V, lorsqu'elles sont poussées par les extrémités des bélières, peuvent s'infléchir jusqu'à venir en butée contre la saillie 1053 qui prolonge les parois des rainures: le ressort 3 joue donc un rôle d'éjection des bélières hors de leurs logements, dès que les doigts 9, normalement engagés dans des ouvertures des bélières lorsque la boucle est fermée, ont été rétractés, de la manière qui sera expliquée dans la suite.

Le moyen d'éjection que l'on vient de décrire est peu encombrant en hauteur et procure un temps d'éjection très bref.

Le barillet 5-6, en appui sur le plateau 1 comme on l'à expliqué ci-dessus, est capoté par la cage 12, laquelle est munie d'encoches telles que 120 qui viennent former, avec des encoches complémentaires telles que 605-505 respectivement formées à la périphérie des disques 6-5, et des alésages, tels que 1055, ménagés dans la partie haute du plateau 1, des alésages destinés à recevoir des vis, telles que 14, dont les extrémités vont venir se visser dans des alésages, tels que 1305, du plateau extérieur 13.

La périphérie de la cage 12 complète la paroi des logements en forme de secteurs ouverts déjà définis et l'on notera qu'une fois le plateau 13 engagé dans la bride circulaire 200 du volant 20 qui lui sert de capot et vient coiffer également le bord extérieur de la cage 12, l'on obtient finalement un corps de boucle ayant la forme générale d'un cylindre particulièrement plat dont les oreilles 15-16, une fois rapprochées l'une de l'autre, dépassent à peine. Elles se logent sous l'étrier central 201 qui fournit, par ailleurs, un appui au pouce, tout en servant de support de serrage à la tête de la vis 21, recouverte d'un cache 22. Cette vis pénètre dans l'alésage d'une pièce carrée 70 solidaire de la tête de l'axe 7, pièce carrée qui sengage dans un logement carré ménagé dans une collerette 202 solidaire de l'étrier 20. La rotation du volant entraîne ainsi celle de l'axe 7.

Comme on va maintenant l'expliquer, la rotation de l'axe 7 a pour effet de provoquer une translation du barillet 5-6 et des doigts qui y sont engagés et cette translation, qui déploie ou rétracte les doigts, est guidée par les vis telles que 14, la cage 12 restant fixe.

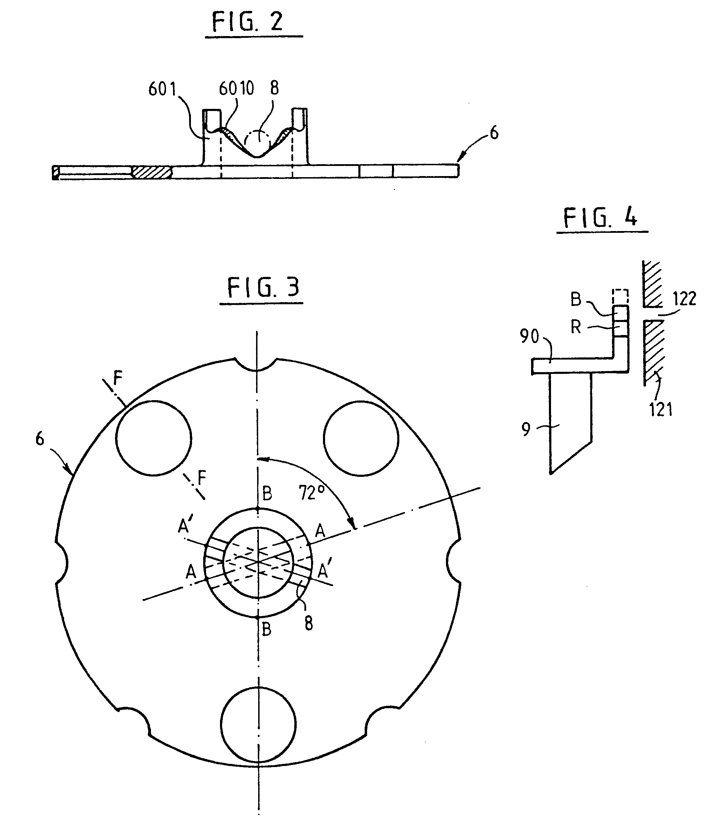

Les figures 2 et 3 permettent de comprendre comment cette conversion du mouvement de rotation de l'axe en translation du barillet parallèlement à l'axe du corps cylindrique de la boucle est obtenue au moyen d'une goupille 8 qui traverse l'axe transversalement et de deux rampes dans lesquelles s'engagent les extrémités respectives de la goupille.

Ces rampes sont formées sur les deux demi-bords diamétralement opposés de la collerette 601 du disque 6. L'une d'elles, 6010, apparaît clairement à la figure 2, où l'on voit qu'elle comporte deux portions d'hélices à pas inversés formant un point bas central et deux points hauts disposés symétriquement par rapport au point central et formant butée. Ainsi, la goupille étant supposée logée par ses extrémités dans les points bas respectifs des deux rampes (position BB de la figure 3), on peut faire tourner l'axe de 72° indifféremment dans un sens ou dans l'autre pour faire occuper à la goupille l'une ou l'autre des deux positions hautes AA et A'A' de la figure 3; l'angle de rotation est limité à 72° à cause des butées.

Si l'on revient maintenant à la figure 1, on voit que la face extérieure du plateau 13 (celle qui est visible au dessin) comporte un évidement qui entoure l'alésage 131 et forme des encoches qui correspondent aux positions BB, AA et A'A' définies ci-dessus (c'est-à-dire que l'angle AA-BB fait 72° et l'angle AA-A'A', 36°).

Lorsque, par appui simultané sur les deux oreilles 15 et 16, le pilote aura dégagé les extrémités intérieures des goupilles ou ergots 17 des encoches centrées sur BB, il aura alors le choix d'amener lesdites goupilles, soit dans les encoches centrées sur AA par rotation du volant de 72° dans le sens des aiguilles d'une montre, soit dans les encoches centrées sur AA' par rotation inverse du même angle.

Cette manoeuvre, nécessairement faite en même temps que les oreilles sont rapprochées l'une de l'autre, est celle qui correspond à l'ouverture de la boucle, supposée initialement fermée avec les doigts 9 déployés et engagés dans les ouvertures des bélières. Elle a pour effet d'amener la goupille 8 dans l'une de ses deux positions hautes, donc d'éloigner le barillet du plateau 1 et ainsi, de rétracter les doigts 9 en comprimant les ressorts 11. Les bélières sont ainsi dégrafées et le ressort 3 les éjecte hors de la boucle.

La boucle conserve cette position désarmée tant que le pilote n'effectue pas un nouveau dégagement des goupilles 17 de leurs encoches au moyen des oreilles et une manoeuvre du volant inverse de la précédente. Cette manoeuvre ramène les goupilles 17 dans les enchoches centrées sur BB et, en même temps, la goupille 8 revient en position basse, sous l'effet de la rotation de l'axe 7 et de la poussée des ressorts 11 qui provoquent le rappel du barillet (puisque leur extrémité opposée s'appuie sur le plateau 13): les doigts 9 sont alors déployés et la boucle est réarmée.

On notera que le ressort 19 a ses extrémités engagées dans des évidements, tels que 150 que comportent les faces intérieures des oreilles, évidements qui, lorsqu'ils se rapprochent l'un de l'autre, forment un logement pour la partie centrale du ressort. Cette disposition empêche que l'on puisse obtenir le dégagement des goupilles 17 des encoches sans exercer une pression simultanée sur les deux oreilles. Au cours de la manoeuvre, une fois le volant amené dans sa position finale, le ressort éloigne les deux oreilles l'un de l'autre jusqu'à ce que les goupilles 17 se soient engagées dans le nouveau couple d'encoches.

On notera également que la collerette 202 sert de butée aux oreilles à peu près au droit des goupilles 17, si bien que celles-ci ne peuvent dépasser une position médiane au-delà de laquelle l'une d'entre elles pourrait, à la suite d'une pression exercée intempestivement sur une seule oreille, provoquer un encliquetage non désiré.

Pour des raisons de poids, les différentes pièces de l'attache que l'on vient de décrire sont de préférence, en aluminium, à l'exception notamment du disque de blocage (plateau extérieur 13) et du disque intérieur 5 du barillet, qui sont, de préférence, en acier, à cause des efforts qu'elles doivent supporter. Le disque 5 ne joue qu'un rôle de positionnement et de reprise des efforts. On notera que le nombre des pièces en mouvement est limité, ce qui accroît la fiabilité.

A la figure 4, on a représenté schématiquement l'un des deux doigts mobiles 9 muni, à son extrémité opposée à celle qui viendra affleurer la surface 103 ou 104, d'une languette en L, 90, dont la branche parallèle à la direction de translation du doigt est disposée en regard d'une paroi 121 du capot 12 et munie de deux régions colorées B et R à son extrémité.

La paroi 121 est munie d'une fenêtre 122 qui permet la visualisation de l'extrémité de ladite branche. Suivant que le doigt est en position rétractée ou déployée, une région colorée, par exemple en rouge ou bleu, sera visible de l'extérieur, de façon à s'assurer que la bélière est effectivement accrochée.

Il va de soi que diverses variantes pourront être imaginées par l'homme du métier, sans sortir du domaine de l'invention, tel qu'il est défini par les revendications.

En particulier, le disque de blocage pourrait comporter un couple d'encoches diamétralement opposées correspondant à des positions de verrouillage et un couple d'encoches diamétralement opposées correspondant à des positions de déverrouillage, les quatre encoches étant décalées de 90° les unes par rapport aux autres. Les deux rampes de conversion du mouvement de rotation en translation portées par le disque 6 devraient alors être remplacées par une rampe ininterrompue comportant deux points hauts alternant avec deux points bas. Cette variante permettrait d'effectuer aussi bien le déverrouillage que le verrouillage en manoeuvrant indifféremment le volant dans un sens ou dans l'autre, mais ne bénéficierait plus de la sécurité supplémentaire fournie par les butées au déverrouillage.

**Revendications**

1. Attache comportant un corps fixable sur une ceinture ayant à sa base de fixation au moins deux logements (103-104) destinés à recevoir des pièces de jonction de la ceinture avec lesquels des organes mobiles de verrouillage viennent s'engager, un volant de manoeuvre (20), situé à la base opposée dudit corps, commandant le déplacement desdits organes mobiles par l'intermédiaire de moyens de transmission (70, 8, 10) et deux leviers (15-16), articulés sur le volant de manoeuvre de façon à pouvoir se rapprocher l'un de l'autre par l'exercice d'une pression simultanée, commandant des moyens de blocage (13) du volant de manoeuvre dans sa position de verrouillage ou de déverrouillage, lesdits moyens de blocage étant solidarisés du corps de l'attache et agencés pour définir une première position angulaire du volant qui correspond à ladite position de verrouillage et une seconde position angulaire du volant qui correspond à une position de déverrouillage, caractérisée en ce que les organes de verrouillage (9) sont montés rétractables sur un équipage (5-6) mobile en translation dans une direction parallèle à l'axe de rotation du volant et bloqué en rotation, que lesdits leviers (15-16) sont munis chacun d'un ergot (17), tandis que les moyens de blocage (13) sont munis d'encoches (AA-AA'-BB') coopérant avec les ergots pour définir, outre ladite première (BB) et ladite seconde (AA) positions angulaires du volant, au moins une troisième (A'A') position angulaire du volant correspondant à une position supplémentaire de déverrouillage, lesdits moyens de transmission (70,8, 10) étant agencés pour transformer les rotations en sens inverses l'un de l'autre du volant, à partir de sa première position angulaire, respectivement vers sa seconde et sa troisième positions angulaires, en un premier mouvement de translation unidirectionnelle de l'équipage mobile vers sa position de déverrouillage et pour transformer les rotations du volant depuis sa seconde ou sa troisième positions angulaires vers sa première position angulaire et un second mouvement de translation de l'équipage mobile inverse du premier vers sa position de verrouillage.

2. Attache selon la revendication 1, caractérisée en ce que les deux positions de déverrouillage sont symétriques par rapport à la position du verrouillage.

3. Attache selon la revendication 1, caractérisée par deux positions angulaires de verrouillage diamétralement opposées et par deux positions de déverrouillage diamétralement opposées dans une direction perpendiculaire à celle des positions de verrouillage.

4. Attache selon la revendication 2 ou 3, caractérisée en ce que lesdits leviers ont la forme d'oreilles ou demi-coquilles (15-16) présentant chacune un évidement (150), un ressort flottant (19) ayant ses extrémités respectives logées dans lesdits évidements en butée contre une paroi de ceux-ci, de manière telle que seul l'exercice d'une pression simultanée sur les deux leviers, en comprimant le ressort, permette de dégager lesdits ergots (17) desdites encoches correspondantes (AA-A'A'-BB).

5. Attache selon la revendication 4, caractérisée en ce que ledit volant de manoeuvre est constitué d'une bride circulaire (200) et d'un étrier (201) relié à la bride à ses deux extrémités diamétralement opposées, les deux oreilles (15-16) étant articulées à une extrémité (18) de cet étrier et venant s'engager entre la bride et l'étrier et un axe central (7), perpendiculaire au plan du volant, étant fixé au centre de ladite bride et servant de butée aux oreilles lorsqu'on les rapproche l'une de l'autre.

6. Attache selon la revendication 5, caractérisée en ce que lesdits moyens de blocage sont constitués par un disque (13) muni d'un alésage central (131) traversé par ledit axe (7), ledit alésage étant entouré d'un évidement annulaire muni à sa périphérie desdites encoches, qui constituent un premier (BB), un second (AA) et un troisième (A'A') couples d'encoches diamétralement opposées.

7. Attache selon la revendication 6, caractérisée en ce que ledit équipage mobile comprend un disque (6) monté mobile en translation guidée dans le corps de l'attache et bloqué en rotation et muni d'une collerette centrale (601) sur le bord libre de laquelle sont formées deux rampes diamétralement opposées comportant chacune deux positions d'hélices (6010) à pas inversés formant un point bas central et deux points hauts disposés symétriquement par rapport au point central et formant butée, et que ledit axe central (7), qui traverse ladite collerette, comporte une goupille traversante transversale (8) dont les extrémités viennent respectivement coopérer avec les deux rampes pour constituer lesdits moyens de transmission.

8. Attache selon la revendication 7, caractérisée en ce que lesdits organes de verrouillage sont des doigts amovibles (9) perpendiculaires au disque (6) de l'équipage mobile, qui traversent des orifices ménagés dans ledit disque (6) et sont munis chacun d'un chapeau d'arrêt recevant un ressort (11) dont l'extrémité opposée s'appuie sur le disque de blocage (13).

9. Attache selon la revendication 7, caractérisée en ce que ledit disque (6) de l'équipage mobile est associé à un disque de renforcement (5).

10. Attache selon la revendication 2 ou 3, comportant en outre des moyens d'éjection des bélières dès que les organes de verrouillage sont rétractés, caractérisée en ce que lesdits moyens d'éjection sont constitués par au moins un ressort à lame de forme segmentée calé dans une pièce (1) du corps de l'attache qui forme lesdits logements (103-104) et agencé pour que l'extrémité de chacune des bélières vienne, lorsque celle-ci est accrochée, en déformer le segment qui lui est opposé.

11. Attache selon la revendication 8, caractérisée par un élément (90) muni d'un repère visuel (BR) solidaire de la tête desdits doigts amovibles (9) et disposé en regard d'une fenêtre (122) ménagée dans la paroi (121) du capot de l'attache.

## Patentansprüche

1. Verschluss bestehend aus: einem an einem Gurt fixierbaren Element, an dessen Fixierungsbasis mindestens zwei Gehäuse (103-104) sind, welche dazu bestimmt sind, Verschlussstücke des Gurtes zu empfangen, mit denen mobile Verschlussstücke sich verbinden, einem Manövrierrad (20), welches sich an der dem erwähnten Element gegenüberliegenden Basis befindet, welches über die Übertragungsmechanismen (70, 8, 10) und zwei Hebel (15-16), welche mit Gelenken an dem Manövrierrad angebracht sind, dergestalt, dass sie sich durch einen simultanen Druck einander nähern, die mobilen Organe betätigt, den Blockierungsmechanismus (13) des Manövrierrades in seinen Positionen Verschluss und Aufschluss betätigt, welche Blockierungsmechanismen mit dem Verschlusskörper verbunden sind und dergestalt angeordnet, dass eine erste Winkelposition des Rades definiert wird, welche der erwähnten Verschlussposition entspricht, sowie eine zweite Winkelposition des Rades, die einer Aufschlussposition entspricht, dadurch charakterisiert, dass die Verschlusselemente (9) zurückziehbar auf eine mobile Ausrüstung (5-6) montiert sind, die in einer der Rotationsachse des Manövrierrades parallelen Richtung verschiebbar und in Rotation blockiert ist, dass die erwähnten Hebel (15-16) jeder mit einem Dorn (17) versehen sind, während die Blockierungsmechanismen (13) mit Kerben (AA-AA'-BB') versehen sind, welche mit den Dornen zusammenwirken, um neben der erwähnten ersten (BB) Winkelposition und der erwähnten zweiten (AA) Winkelposition auch noch mindestens eine dritte Winkelposition (A'A') des Manövrierrades zu definieren, welche einer zusätzlichen Aufschlussposition entspricht, welche Übertragungsmechanismen (70, 8, 10) derart angeordnet sind, dass die Rotationen in entgegengesetzte Richtungen des Rades, ausgehend von der ersten Winkelposition oder aber auf die zweite oder dritte Winkelposition hin, in eine erste gerade Richtungsübertragungsbewegung der mobilen Ausrüstung in die Aufschlussposition umgewandelt werden und die Rotationen des Rades von seiner zweiten und dritten Winkelposition in die erste Winkelposition in eine zweite, der ersten entgegengesetzten Übertragungsbewegung der mobilen Ausrüstung in ihre Verschlussposition umgewandelt werden.

2. Verschluss nach Anspruch 1, charakterisiert dadurch, dass die beiden Aufschlusspositionen im Verhältnis zur Verschlussposition symmetrisch sind.

3. Verschluss nach Anspruch 1, charakterisiert durch zwei einander diametral gegenüberliegende Verschlusswinkelpositionen und zwei einander diametral gegenüberliegende Aufschlusspositionen in einer zu den Positionen des Verschlusses kreuzenden Richtung.

4. Verschluss nach Anspruch 2 oder 3, charakterisiert dadurch, dass die besagten Hebel die Form eines Ohres oder einer Halbmuschel haben (15-16), wovon jeder eine Aushöhlung (150) und eine schwebende Feder (19) aufweist, deren jeweilige Endpunkte im Anschlag in besagten Aushöhlungen gegen deren Wandung liegen, so dass einzig der simultane Druck auf die beiden Hebel, durch das Zusammenpressen der Feder, die Freigabe der erwähnten Dornen (17) aus den erwähnten entsprechenden Kerben (AA-A'A'-BB) erlaubt.

5. Verschluss nach Anspruch 4, charakterisiert dadurch, dass das erwähnte Manövrierrad aus einem Ring (200) und einem Bügel (201) besteht, welcher mit dem Ring an seinen beiden einander gegenüberliegenden Enden verbunden ist, wobei die beiden Ohren (15-16) mit der einen Extremität (18) des besagten Bügels gelenkig verbunden sind und zwischen den Ring und den Bügel zu liegen kommen und eine zentrale Achse (7), die senkrecht zur Ebene des Rades verläuft, in der Mitte des besagten Bügels befestigt ist und den Ohren als Anschlag dient, sobald sie zueinander gedrückt werden.

6. Verschluss nach Anspruch 5, charakterisiert dadurch, dass die erwähnten Blockierungsmechanismen aus einer Scheibe (13) bestehen, die in der Mitte eine Ausbohrung (131) aufweist, die von der erwähnten Achse (7) durchquert wird, welche Ausbohrung von einer ringförmigen Aushöhlung umgeben ist, an deren Peripherie sich die erwähnten Auskerbungen befinden, welche ein erstes (BB), ein zweites (AA) und ein drittes (A'A') einander diametral gegenüberliegendes Auskerbungspaar bilden.

7. Verschluss nach Anspruch 6, charakterisiert dadurch, dass die erwähnte mobile Ausrüstung aus einer mobil montierten Scheibe (6), die im Verschlusskörper verschiebbar geführt wird und in Rotation blockiert ist, besteht, die mit einem zentralen Flansch (601) versehen ist, an dessen freiem Rand zwei einander diametral gegenüberliegende Rampen geformt sind, welche jede zwei Gewindeteile (6010) mit entgegengesetztem Gewinde aufweisen, die einen mittleren Tiefpunkt bilden, sowie zwei Hochpunkte, welche im Verhältnis zum Mittelpunkt symmetrisch angeordnet sind und einen Anschlag bilden, und dass die erwähnte zentrale Achse (7), die den erwähnten Flansch durchquert, einen transversalen durchquerenden Splint (8) aufweist, dessen Enden jeweils mit den beiden Rampen zusammenwirken, um den erwähnten Übertragungsmechanismus zu bilden.

8. Verschluss nach Anspruch 7, charakterisiert dadurch, dass die erwähnten Verschlusselemente lösbare Finger (9) senkrecht zur Scheibe (6) der mobilen Ausrüstung sind, welche die ausgesparten Öffnungen dieser Scheibe (6) durchqueren und jeweils mit einem Arretierungskopf versehen sind, welcher eine Feder (11) empfängt, deren gegenüberliegende Extremität sich auf die Blockierungsscheibe (13) stützt.

9. Verschluss nach Anspruch 7, charakterisiert dadurch, dass der erwähnten Scheibe (6) der mobilen Ausrüstung eine Verstärkungsscheibe (5) zugeordnet ist.

10. Verschluss nach Anspruch 2 oder 3, welcher ausserdem Mittel zum Auswerfen der Einhakungen aufweist, sobald die Verschlusselemente zurückgezogen sind, charakterisiert dadurch, dass die erwähnten Auswerfmittel aus mindestens einer Blattfeder in segmentierter Form bestehen, die in ein Teil des Verschlusskörpers (1) verkeilt ist, welches die beschriebenen Aushöhlungen (103-104) bildet und derart angeordnet ist, dass die Extremität jeder Einhakung, sobald sie eingehakt ist, das ihr gegenüberliegende Segment verformt.

11. Verschluss nach Anspruch 8, charakterisiert durch ein Element (90), welches mit einem sichtbaren Bezugspunkt (BR) versehen ist, der mit den Köpfen der besagten lösbaren Finger (9) verbunden ist und gegenüber einem Fenster (122) angeordnet ist, welches in der Wandung (121) der Verschlusshaube freigelassen wurde.

## Claims

1. A connector with a body able to be affixed to a belt having around its fixation base at least two spaces (103-104) destined to receive the connecting pieces of the belt, into which the mobile fastening mechanisms come to be engaged, a handling wheel (20) placed at the opposite base of said body, controlling the displacement of the said mobile mechanisms by the intermediary of transmission devices (70, 8, 10) and two ear-shaped levers (15-16) articulated to the handling wheel so as to be able to be moved close together by the exerting of simultaneous pressure, and which control the blocking mechanisms (13) of the handling wheel in its positions of fastening and releasing, the which blocking mechanisms are fixed solid to the body of the connector and placed so as to define a first angular position of the handling wheel corresponding to the said fastening position and a second angular position corresponding to a releasing position, characterized by the fact that the blocking mechanisms (9) are retractable and mounted on a mobile team (5-6) in translatory movement in a direction parallel to the rotation axis of the handling wheel and blocked in rotation, that the said ear-shaped levers (15-16) are each equipped with a spur (17), while the blocking mechanisms (13) have slots (AA-AA'-BB') working in conjunction with the spurs to define, other than the said first (BB) and second (AA) angular positions of the handling wheel, at least one third angular position (A'A') of the handling wheel corresponding to a further releasing position, the said transmission devices (70, 8, 10) being so placed as to transform the rotations of the handling wheel in the opposite direction one from the other, as of a first angular position, respectively towards its second or third angular positions, into a first unidirectional translatory movement of the mobile team towards its releasing position and to transform the rotations of the handling wheel from its second or third angular position towards its first angular position and a second translatory movement of the mobile team in the opposite direction as the first towards its fastening position.

2. The connector according to claim 1, characterized in that the two releasing positions are symmetrical with regard to the fastening position.

3. The connector according to claim 1, characterized by two diametrically opposed angular fastening positions and by two diametrically opposed releasing positions in a direction perpendicular to that of the fastening positions.

4. The connector according to claim 2 or 3, characterized in that the said levers are shaped like ears or half-shells (15-16), each having a cutaway space (150), a floating spring (19) having its respective extremities lodged in the said cutaway spaces and butting against a face of these spaces, in a manner such that only simultaneous pressure on the two ear-shaped levers, by compressing the spring, brings about the disengaging of the said spurs (17) from the said corresponding slots (AA-A'A'-BB).

5. The connector according to claim 4, characterized in that the said handling wheel consists of a circular bridle (200) and a stirrup (201), linked to the bridle at its two diametrically opposed extremities, the two ear-shaped levers (15-16) being articulated to one extremity (18) of this stirrup and coming to house themselves between the bridle and the stirrup and a central axis (7) perpendicular to the plane of the handling wheel, being fixed to the center of the said bridle and serving as a stop to the ear-shaped levers when these are pressed close together.

6. The connector according to claim 5, characterized in that the said blocking mechanisms consist of a disk (13) having a central bore (131) traversed by the said axis (7), the said bore being surrounded by a cutaway annular space having on its edges the said slots, which constitute a first (BB), a second (AA) and a third (A'A') couple of diametrically opposed slots.

7. The connector according to claim 6, characterized in that the said mobile team has a disk (6) mounted mobile in translatory guided movement in the body of the connector and blocked in rotation and equipped with a central flange (601) on the free edge of which are formed two diametrically opposed ramps each having two respective threaded propeller portions (6010) forming a central low point and two high points set symmetrically with regard to the central point and forming a stop, and that the said central axis (7), which crosses the said flange, has a transversally-crossing pin (8) whose extremities align respectively to correspond with the two ramps to thus constitute the said transmission devices.

8. The connector according to claim 7, characterized in that the said fastening mechanisms are mobile fingers (9) set perpendicular to the disk (6) of the mobile team, which traverse orifices in the said disk (6) and are each equipped with a stopping tip on which fits a spring (11) the opposite extremity of which is pressed against the blocking disk (13).

9. The connector according to claim 7, characterized in that the said disk (6) of the mobile team is associated to a reinforcement disk (5).

10. The connector according to claim 2 or 3, further comprising a mechanism for ejecting the perforated tongues as soon as the fastening mechanisms are pulled back, characterized in that the said ejection devices consist of at least one blade spring of segmented shape set in a part (1) of the body of the connector that forms the said spaces (103-104) and arranged so that the extremity of each of the perforated tongues shall come, when these are inserted in place, to deform the segment opposite to it.

11. The connector according to claim 8, characterized by an element (90) having a visual signal device (BR) fixed to the tip of the said movable fingers (9) and set in line with a window (122) being an aperture in the face (121) of the connector's hood.

**FIG.1**

## FIG. 2

## FIG. 4

## FIG. 3